(19) Europäisches Patentamt
European Patent Office
Office européen des brevets

(11) EP 0 311 349 B1

(12) **EUROPEAN PATENT SPECIFICATION**

(45) Date of publication and mention of the grant of the patent:
**11.09.1996 Bulletin 1996/37**

(51) Int Cl.[6]: **C08L 81/06**, C08L 71/00

(21) Application number: **88309231.4**

(22) Date of filing: **04.10.1988**

(54) **Polymer composition**

Polymermasse

Composition de polymères

(84) Designated Contracting States:
**AT BE CH DE ES FR GB IT LI LU NL SE**

(30) Priority: **05.10.1987 GB 8723291**
**13.10.1987 GB 8724029**

(43) Date of publication of application:
**12.04.1989 Bulletin 1989/15**

(73) Proprietors:
- **IMPERIAL CHEMICAL INDUSTRIES PLC**
  **London SW1P 3JF (GB)**
- **ICI COMPOSITES INC.**
  **Winona, Minnesota 55987 (US)**

(72) Inventors:
- **McGrail, Patrick Terence**
  **Saltburn Cleveland (GB)**
- **Sefton, Mark Stephen**
  **Northallerton Cleveland (GB)**
- **Peacock, Judith Alison**
  **Middlesbrough Cleveland (GB)**
- **Almen, Gregory Roy**
  **Messa Arizona 85201 (US)**
- **Wilkinson, Steven Paul**
  **Keighley West Yorkshire (GB)**

(74) Representative: **Graham, John George et al**
**ICI Chemicals & Polymers Limited**
**Intellectual Property Department,**
**P.O. Box 90, Wilton**
**Middlesbrough, Cleveland TS90 8JE (GB)**

(56) References cited:
**EP-A- 0 170 065** **EP-A- 0 193 082**
**EP-A- 0 211 147** **DE-A- 3 322 886**

- **Encyclopedia of Polymer Science and Engineering Vol. 12, p. 418**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 311 349 B1

## Description

This invention relates to a polymer composition comprising a thermoplast and a thermoset.

It has been proposed to modify thermoset polymers by incorporating aromatic sulphone polymer thermoplasts with them, for example in US 3530087, US 4661559, US 4663401 and EP-A-193082. The state in which the components exist as such compositions is not generally disclosed in detail, but in EP-A-193082 is stated to be characterised by domains of thermoset resin in a continuous thermoplast phase.

We have now produced a composition in which a thermoplast polymer and a thermoset polymer are combined together in distinct morphology that results in advantageous properties such as flexural modulus, compressive yield stress and fracture toughness. We have also identified a new thermoplast polymer especially suitable as a component of our composition and a method of bringing together a thermoplast and a thermoset polymer.

According to the invention a polymer composition comprises a thermoset resin component selected from the group consisting of an epoxy resin, an addition-polymerisation resin, preferably a bis-maleimide resin, a formaldehyde condensate resin, preferably a formaldehyde-phenol resin, a cyanate resin, an isocyanate resin and mixtures of two or more thereof and a polyarylsulphone component comprising at least one polyarylsulphone comprising ether- and/or thioether-linked repeating units selected from the group consisting of

$$-(PhSO_2Ph)_n-$$

and

$$-(Ph)_a-$$

wherein Ph is phenylene, n = 1 to 2 and can be fractional, a = 1 to 3 and can be fractional and when a exceeds 1, said phenylenes are linked linearly through a single chemical bond or a divalent group other than $-SO_2-$ or are fused together, provided that the repeating unit $-(PhSO_2Ph)_n-$ is always present in said at least one polyarylsulphone in such a proportion that on average at least two of said units $-(PhSO_2Ph)_n-$ are in sequence in each polymer chain present, said at least one polyarylsulphone having reactive pendant and/or end groups of formula -A'-Y where A' is a divalent hydrocarbon group and Y is a group selected from groups providing active hydrogen, epoxy, cyanate isocyanate, vinyl, allyl, ethynyl and maleimide functionality, each of such components being present in mutually interpenetrating phases.

The term "component" signifies that each phase is rich respectively in polyarylsulphone or thermoset resin but need not consist thereof.

Accompanying Figure 1 shows examples of the morphology of certain thermoplast/thermoset compositions in the cured state. In figures 1(a) and 1(b) which do not represent the invention, the thermoset resin component is dispersed in respectively small and large units ("islands") throughout a continuous phase ("sea") of thermoplast component or vice versa. In figure 1(c) which also does not represent the invention, the two components are respectively so finely dispersed as to produce an effectively homogeneous mixture. In figure 1(d), according to the invention, the components are combined in a network in which each extends continuously through any mass of the composition. On a microscopic scale, one phase is believed to be in the form of a net in 2 or 3 dimensions, and the second phase fills the interstices between the threads of the net. It appears that the first phase is anisotropic on a microscopic scale; the second phase can be istotropic or anisotropic.

The minimum dimension of each phase is typically at least 0.005, for example in the range 0.01 to 10, especially up to 5, microns. The maximum dimension of each phase is considerably greater for example UD at least 10, and may be at least 10% of the geometric dimension of a mass of the composition. The two said phases can be the product of spinodal decomposition (described further below) of an initially substantially homogeneous liquid mixture containing the polyarylsulphone and the uncured or incompletely cured thermoset resin component.

In preferred forms, as will be described, the composition is characterised by chemical bonds bridging the interface between the two phases. As a result of the fineness of the mutual dispersion of the two phases, the solubility or swellability of the thermoplast is substantially less than if the thermoset resin were not present. This is so even if the thermoplast is of molecular weight over 10000.

The morphology of the composition is evident in solid structures formed from the composition. The invention includes also precursor compositions (detailed below) which are flowable or plastic and are convertible to such a solid composition by solvent removal and at least partial curing; in such a flowable or plastic composition the specified morphology may be evident, but more usually shows only after solvent removal and/or curing.

As discussed above, said at least one polyarylsulphone contains the repeating units $(PhSO_2Ph)_n$ linked through ether and/or thioether, where n=1 to 2 and can be fractional. It contains also units $(Ph)_a$ so linked, where Ph is phenylene (especially paraphenylene), a is 1 to 3 and can be fractional and such phenylenes are linked linearly through a single chemical bond or a divalent group other than $SO_2$ or are fused together. By "fractional" reference is made to the average value for a given polymer chain containing units having various value of n or a.

Additionally, as also discussed, in said at least one polyarylsulphone, the relative proportions of the said repeating

units is such that on average at least two units $(PhSO_2Ph)_n$ are in immediate mutual succession in each polymer chain present and is preferably in the range 1:99 to 99:1, especially 10:90 to 90:10, respectively. Typically the ratio is in the range 25-50 $(Ph)_a$, balance $(Ph\ SO_2Ph)_n$. In preferred polyarylsulphones the units are

I X Ph $SO_2$ Ph X Ph $SO_2$ Ph ("PES") and

II X (Ph)a X Ph $SO_2$ Ph ("PEES")

where X is O or S and may differ from unit to unit; the ratio of I to II (respectively) preferably between 10:90 and 80:20 especially between 10:90 and 55:45.

The preferred relative proportions of the repeating units of the polyarylsulphone may be expressed in terms of the weight percent $SO_2$ content, defined as 100 times (weight of $SO_2$)/(weight of average repeat unit). The preferred $SO_2$ content is at least 22, preferably 23 to 25%. When a = 1 this corresponds to PES/PEES ratios of at least 20:80, preferably in the range 35:65 to 65:35.

The above proportions refer only to the units mentioned. In addition to such units the polyarylsulphone may contain up to 50 especially up to 25% molar of other repeating units: the preferred $SO_2$ content ranges (if used) then apply to the whole polymer. Such units may be for example of the formula

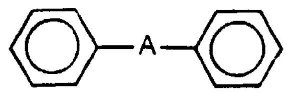

in which A is a direct link, oxygen, sulphur, -CO- or a divalent hydrocarbon radical. When the polyarylsulphone is the product of nucleophilic synthesis, its units may have been derived for example from one or more the following bisphenols and/or corresponding bisthiols or phenol - thiols:

hydroquinone
4,4'-dihydroxybiphenyl
resorcinol
dihydroxynaphthalene (2,6 and other isomers)
4,4'-dihydroxybenzophenone
2,2'-di(4-hydroxyphenyl)propane or -methane.

If a bis-thiol is used, it may be formed in situ, that is, a dihalide as described for example below may be reacted with an alkali sulphide or polysulphide or thiosulphate.

Other examples of such additional units are of the formula

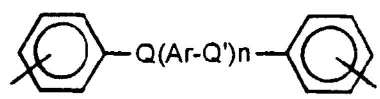

in which Q and Q', which may be the same or different, are CO or SO2; Ar is a divalent aromatic radical; and n is 0, 1, 2, or 3, provided that bn is not zero where Q is SO2. Ar is preferably at least one divalent aromatic radical selected from phenylene, biphenylene or terphenylene. Particular units have the formula

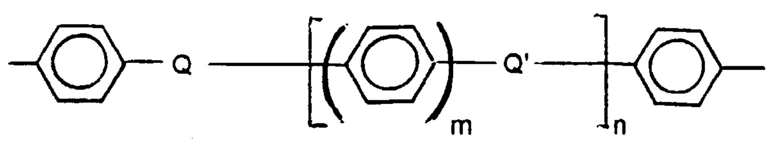

where m is 1, 2 or 3. When the polymer is the product of nucleophilic synthesis, such units may have been derived from one or more dihalides, for example:

4,4'-dihalobenzophenone
4,4' bis(4-chlorophenylsulphonyl)biphenyl
1,4 bis(4-halobenzoyl)benzene
4,4'-bis(4-halobenzoyl)biphenyl

They may of course have been derived partly from the corresponding bisphenols.

The polyarylsulphone may be the product of nucleophilic synthesis from halophenols and/or halothiophenols. In any nucleophilic synthesis the halogen if chlorine or bromine may be activated by the presence of a copper catalyst.

Such activation is often unnecessary if the halogen is activated by an electron withdrawing group. In any event fluoride is usually more active than chloride. Any nucleophilic synthesis of the polyarylsulphone is carried out preferably in presence of one or more alkali metal carbonates in up to 10% molar excess over the stoichiometric and of an aromatic sulphone solvent, at a temperature in the range 150-350°C.

If desired, the polyarylsulphone may be the product of electrophilic synthesis.

As previously mentioned, said at least one polyarylsulphone contains end groups and/or pendant groups of formula -A'-Y where A' is a divalent hydrocarbon group, preferably aromatic Y are groups providing active hydrogen, especially OH, $NH_2$, NHR or -SH, where R is a hydrocarbon group containing up to 8 carbon atoms, or epoxy, cyanate, isocyanate, ethynyl vinyl, allyl or maleimide providing other cross-linking reactivity.

The number average molecular weight of the polyarylsulphone is suitably in the range 2000 to 60000. Preferably it is over 9000 especially over 10000 for example 11000 to 25000 and structurally as well as by chemical interaction increases toughness by comparison with that of the thermoset resin alone by providing zones of the tough thermoplast between cross-linked thermoset zones. Another useful sub-range is 3000-11000, especially 3000-9000 in which it acts more as a chain-extender for the thermoset resin, separating and diluting local cross-link zones and thus toughening the structure. Within the above definition of the polyarylsulphone those are preferably chosen which are miscible with suitable epoxy resin precursors, have high modulus and Tg and are tough.

It is convenient to use reduced viscosity (RV), measured on a solution of 1g of polymer in 100 ml of solution in dimethyl formamide at 25°C as an indicated of molecular weight, the correlation being as follows:

| | | | | |
|---|---|---|---|---|
| RV | 0.15 | 0.25 | 0.45 | 0.92 |
| MW (number average) | 5000 | 13000 | 20000 | 60000 |

(Such molecular weights were in fact measured by vapour phase osmometry and are of course subject to the usual error range of about 10%).

A polyarylsulphone of molecular weight at least 9000 containing the units $(PhSO_2Ph)_n$ and $(Ph)_a$ in the proportions defined above, with possibly one or more of the said additional units in the proportions defined above, all linked through ether and/or thioether and in which at least 30% of its end groups are $NH_2$, is new.

A process for preparing such a polyarylsulphone comprises reacting at a temperature in the range 150-350° the corresponding halogen-ended polymer with a compound containing an aromatic amine group and an aromatic hydroxy and/or thiol group in the presence of a base, preferably one or more alkali metal carbonates, and of an aromatic sulphone solvent. It provides also the total process including preparation of such a halogen-ended polymer from nucleophilic reactant as detailed herein.

The weight proportion of thermoplast component in the composition is typically in the range 5-90%, especially 20-50, for example 25-40%. These percentages represent non-volatile constituents after curing the thermoset resin at up to 200°C.

In this specification the term "thermoset resin" will signify that such resin is in such a state, for example has been at least partly cured, as to establish the morphology which the polymer blend will exhibit after curing. The degree of cure may be sufficiently incomplete to permit some flowability or plasticity, thus permitting fabrication in conditions not destructive of the morphology, followed by final cure to give a solid article. In some compositions according to the invention the specified morphology may be established only at high degrees of cure. However, a thermosettable component such as a diglycidyl reactant, which is often referred to as a "resin", will be herein referred to as a "resin precursor".

A wide range of thermoset resins can be toughened by incorporation with the polyarylsulphone. Among those to which the invention is applicable are:

addition-polymerisation resins such as acrylics, vinyls, bis-maleimides (BMI) and unsaturated polyesters;
formaldehyde condensate resins such as with urea, melamine or phenols;
cyanate resins;
isocyanate resins;
epoxy resins;

and mixtures of two or more of these.

The epoxy resin is suitable the product of at least partly curing a resin precursor using a curing agent and possibly also a catalyst. The resin precursor is typically the mono or poly-glycidyl derivative of one or more of:

aromatic diamines
aromatic monoprimary amines

aminophenols
polyhydric phenols
polyhydric alcohols
polycarboxylic acids.

Examples are the following, which are liquids at ambient temperature:

tetraglycidyl diamino diphenylmethane eg "MY 720" or "MY 721" sold by Ciba-Geigy, viscosity 10-20 Pa s at 50°C; (MY 721 is a lower viscosity version of MY720 and is designed for higher use temperatures);
triglycidyl derivative of p-aminophenol (eg "MY 0510" sold by Ciba-Geigy), viscosity 0.55 - 0.85 Pa s at 25 °C; preferably of viscosity 8-20 Pa s at 25°C; preferably this constitutes at least 25% of the epoxy components used;
diglycidyl ether of 2,2-bis(4,4'-dihydroxy phenyl) propane (eg "Epikote 828" sold by Shell), preferably of viscosity 8-20 Pa s at 25°C;
epoxy Novolak (eg "DEN 431" sold by Dow), varieties in the low viscosity class of which are preferred in making compositions according to the invention;
Bisphenol F, which is in the low viscosity class.

Other epoxy resin precursors includes cycloaliphatics such as 3',4'-epoxycyclohexyl-3,4-epoxycyclohexane carboxylate (eg CY 179 sold by Ciba-Geigy) and those in the Bakelite" range of Union Carbide Corporation.

The curing agent is preferably an amino compound having a molecular weight up to 500 per amino group, for example an aromatic amine or a guanidine derivative. Particular examples are 3,3'- and 4,4'-diaminodiphenylsulphone, methylenedianiline and dicyandiamide. Such amine curing agents are additional to the amine-ended thermoplast: thus the composition preferably contains epoxy-reactive amines of two types, one having a molecular weight up to 500 per amine group, the other having a molecular weight of at least 5000 per amine group and the total amine content being in the range 70-110% of the stoichiometric requirement of the epoxy resin precursor. Other standard epoxy curing agents such as aliphatic diamines, amides, carboxylic acid anhydrides, carboxylic acids and phenols can be used if desired.

If a catalyst is used, it is typically a Lewis acid, for example boron trifluoride, conveniently, as a derivative with an amine such as piperidine or methyl ethylamine. Altematively it can be basic, for example an imidazole or amine.

We find it advantageous to choose a low viscosity epoxy resin precursor (under 100, for example 0.3-50 Pa s at 25°C) for at least part of the thermoset resin precursor. There may also be present a proportion of high viscosity (over 100 Pa s at 25°C) epoxy resin precursor. By keeping the viscosity low or moderately low it becomes easier to ensure that the thermoplast is in solution, to ensure good flow behaviour when pre-pregging continuous fibre and to endow pre-pregs with tack and drape properties.

If the thermoset resin component is a BMI resin, it is derived suitably from a precursor of general formula

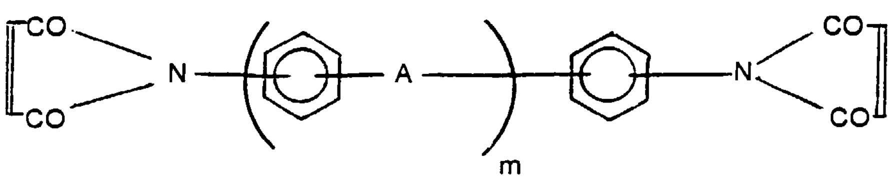

where m is 1 to 4 and A is as defined hereinbefore and the A's differ when m exceeds 1.

The composition is particularly suitable for fabrication of structures, including load-bearing or impact resisting structures. For this purpose it may contain a reinforcing agent such as fibres. Fibres can be added short or chopped typically of mean fibre length not more than 2 cm, for example about 6 mm, typically at a concentration of 5 to 35, preferably at least 20%, by weight. For structural applications, it is preferred to use continuous fibre for example glass or carbon, especially at 30 to 70, more especially 50 to 70, % by volume.

The fibre can be organic, especially of stiff polymers such as poly paraphenylene terephthalamide, or inorganic. Among inorganic fibres glass fibres such as "E" or "S" can be used, or alumina, zirconia, silicon carbide, other compound ceramics or metals. A very suitable reinforcing fibre is carbon, especially as graphite. Organic or carbon fibre is preferably unsized or is sized with a material that is compatible with the composition according to the invention, in the sense of being soluble in the liquid precursor composition without adverse reaction or of bonding both to the fibre and to the thermoset/thermoplastic composition according to the invention. In particular carbon or graphite fibres that are unsized or are sized with epoxy resin precursor or thermoplast such as polyarylsulphone are preferred. Inorganic fibre preferably is sized with a material that bonds both to the fibre and to the polymer composition; examples are the organo-silane coupling agents applied to glass fibre.

The composition may contain for example conventional toughening agents such as liquid rubbers having reactive

groups, aggregates such as glass beads, rubber particles and rubber-coated glass beads, filler such as polytetrafluorethylene, graphite, boron nitride, mica, talc and vermiculite, pigments, nucleating agents, and stabilisers such as phosphates. The total of such materials and any fibrous reinforcing agent should be such that the composition contains at least 20% by volume of the polysulphone/thermoset mixture. The percentages of fibres and such other materials are calculated on the total composition after curing at up to 200°C.

Another aspect of the invention provides a process for making a thermosettable composition by the steps of:

(a) making a blend comprising an uncured or incompletely cured precursor of a thermoset resin component selected from the group consisting of an epoxy resin, an addition-polymerisation resin, preferably a bis-maleimide resin, a formaldehyde condensate resin, preferably a formaldehyde-phenol resin, a cyanate resin, an isocyanate resin and mixtures of two or more thereof, a polyarylsulphone component comprising at least one polyarylsulphone comprising ether- and/or thioether-linked repeating units selected from the group consisting of

$$-(PhSO_2Ph)_n-$$

and

$$-(Ph)_a-$$

wherein Ph is phenylene, n = 1 to 2 and can be fractional, a = 1 to 3 and can be fractional and when a exceeds 1, said phenylenes are linked linearly through a single chemical bond or a divalent group other than $-SO_2-$ or are fused together, provided that the repeating unit $-(PhSO_2Ph)_n-$ is always present in said at least one polyarylsulphone in such a proportion that on average at least two of said units $-(PhSO_2Ph)_n-$ are in sequence in each polymer chain present, said at least one polyarylsulphone having reactive pendant and/or end groups of formula -A-Y where A is a divalent hydrocarbon group and Y is a group selected from groups providing active hydrogen, epoxy, cyanate, isocyanate, vinyl, allyl, ethynyl and maleimide functionality, and optionally a solvent therefor, said components being selected and the conditions of blending being controlled so that the polyarylsulphone and precursor are present as a substantially homogeneous single phase stable liquid mixture;
(b) rendering said mixture unstable by one or more of these measures:

(i) adding or (if present) removing solvent;
(ii) changing temperature;
(iii) adding fibres and/or particulate filler;
(iv) causing partial curing of said precursor;

(c) decomposing said mixture spinodally into at least 2 mutually interpenetrating phases; and
(d) if required, adding (further) fibres and/or particulate filler.

The resulting composition can have a shelf life long enough for it to be handled in commerce. Step (b) can include

(e) forming the mixture into a prepreg by impregnation of continuous fibres;
(f) laying-up said prepreg;
(g) curing the thermoset resin precursor.

The prepreg resulting from step (e) can also have a shelf life long enough to be handled in commerce. The products-of step (d) and step (e) constitute further embodiments of the invention.

Herein the products of the various steps are referred to as follows:

| | |
|---|---|
| step (a) : | first composition precursor or, if solvent has been removed without spinodal decomposition, concentrated first composition precursor; |
| step (c): | second composition precursor; |
| step (e): | prepreg; |
| step(g): | composition |

If the composition is to be shaped by pre-pregging or lamination, the hardener is added preferably during that operation.

The first composition precursor is made by mixing the polysulphone, thermoset precursor and (at some stage) any fibrous reinforcing agent and other materials. A solvent may be present. The solvent and the proportion thereof are chosen so that the mixture of polymer and resin precursor form at least a stable emulsion, preferably a stable apparently single-phase solution. The ration of solvent to polysulphone is suitably in the range 5:1 to 20:1 by weight. Preferably

a mixture of solvents is used, for example of a halogenated hydrocarbon and an alcohol, in a ratio suitably in the range 99:1 to 85:15. Conveniently the solvents in such a mixture should boil at under 100°C at 1 atm pressure and should be mutually miscible in the proportions used. Alternatively the polysulphone and thermoset or precursor can be brought together by hot melting and/or high shear mixing.

The mixture is stirred until sufficiently homogeneous. Thereafter any soilvent is removed by evaporation to give a concentrated first composition precursor or, if the desired morphology is already present, a second composition precursor. Evaporation is suitably at 50-200°C and, at least in its final stages, can be at subatmospheric pressure, for example in the range 13.33 Pa to 1333 Pa (0.1 to 10 mm Hg). The concentrated first composition precursor or second composition precursor preferably contains up to 5% w/w of volatile solvent, to assist flow when used to impregnate fibres. This residual solvent is removed in contact with the hot rollers of the impregnating machine.

The concentrated first composition precursor or the second composition precursor, possibly containing some volatile solvent already present or newly added, can be used for example as an adhesive or for coating surfaces or for making solid structures by casting possibly in a foamed state. Short fibre reinforcement may be incorporated with composition precursor. Preferably a fibre-reinforced composition is made by passing essentially continuous fibre into contact with either such precursor composition. The resulting impregnated fibrous reinforcing agent may be used alone or together with other materials, for example a further quantity of the same or a different polymer or resin precursor or mixture, to form a shaped article. This technique is described in more detail in EP-A-56703, 102158 and 102159.

A further procedure comprises forming incompletely cured composition into film by for example compression moulding, extrusion, melt-casting or belt-casting, laminating such films to fibrous reinforcing agent in the form of for example a non-woven mat of relatively short fibres, a woven cloth or essentially continuous fibre in conditions of temperature and pressure sufficient to cause the mixture to flow and impregnate the fibres and curing the resulting laminate.

Plies of impregnated fibrous reinforcing agent, especially as made by the procedure of one or more of EP-A 56703, 102158 and 102159, can be laminated together by heat and pressure, for example by compression moulding or by heated rollers, at a temperature above the curing temperature of the thermosetting resin or, if cured has already taken place, above the glass transition temperature of the mixture, conveniently at least 120°C and typically above 180°C, and at a pressure in particular at least 0.1, preferably at least 5,MN/$m^2$.

The resulting multi-ply laminate may be anisotropic in which the fibres are oriented essentially parallel to one another or quasi-isotropic in each ply of which the fibres are oriented at an angle, conveniently 45° as in most quasi-istotropic laminates but possibly for example 30° or 60° or 90° or intermediately, to those in the plies above and below. Orientations intermediate between anisotropic and quasi-isotropic, and combination laminates, may be used. Suitable laminates contain at least 4 preferably at least 8, plies. The number of plies is dependent on the application for the laminate, for example the strength required, and laminates containing 32 or even more, for example several hundred, plies may be desirable. There may be aggregates, as mentioned above in interlaminar regions.

Mouldings or laminates formed from a composition in which the polysulphone contains the repeating units I and II in essentially equimolar proportions and the reinforcing agent is essentially continuous carbon fibre show at a temperature up to 71°C a deterioration of less than 30% in flexural modulus as measured at 23°C. Furthermore, although the polysulphone is amorphous, the composition has an environmental resistance superior to that of many other amorphous polymers. Thus after exposure to water at 71°C for 14 days such a composition showed essentially unaffected transverse flexural strength and short-beam shear strength (SBSS). Furthermore, after exposure to a hydraulic fluid at 70°C for 14 days, a similar composition showed only a slight weight loss.

In the accompanying drawings:

Figure 1 shows transmission electron microscope (TEM) photographs of 4 possible morphologies of thermoplast/thermoset compositions. Figure 1(d) relates to the invention;

Figure 2 shows SEM photographs of resin fracture surfaces for 2 morphologies;

Figure 3(a), 3(b) are graphs of the data in Table 4 below showing the dependence of fracture energy $G_{Ic}$ and critical stress intensity factor $K_{Ic}$ on the ratio of units I and II in the thermoplast component of the composition.

Reference to figure 1 has already been made and will be further made in reporting the experimental results below. The invention morphology shown in figure 1(d) appears to have two phases, each of which is continuous in at least one dimension, and which form an interpenetrating network morphology resulting from spinodal decomposition.

The fracture surfaces shown in figure 2 show clearly difference between a 2-phase composition (a) and the interpenetrating network of the invention (b). The two morphologies result in different micromechanisms of failure, the invention structure having greater toughness.

<u>Mechanical properties of non-composite test pieces</u>

The properties of flexural modulus, compressive yield stress and resin fracture toughness, $G_{Ic}$, were determined

as follows:
Flexural modulus was measured using a three point bend uniform beam specimen on an "Instron" model 1122 testing machine, at a cross-head speed of 5 mm/min, and is given by:

$$E = \frac{1}{4}\,\frac{F}{\delta}\,\frac{L^3}{BW^3} \qquad (1)$$

where

F is the force required to cause central deflection;
(F/δ) was evaluated at small deflection;
δ is less than W/2, W is the thickness, and B the breadth of the sample; and L is the separation of the supports.

Typically L=0.05m, B=0.01m and W=0.003m.

To characterise toughness, a three point bend, single edge-notched, linear elastic fracture mechanics test was used. The parameter $G_{Ic}$, the critical value of the strain energy release rate in crack opening mode, is given by:

$$G_{1c} = \frac{U_c}{BW\phi} \qquad (2)$$

where ϕ is a function of geometry and $U_c$, the energy absorbed, was obtained from instrumented impact measurements.

Sample test conditions followed one of three possibilities:

a) Machine notch; temperature -65°C; test speed 1 m $s^{-1}$.
b) Machine pre-notch, then razor blade notch to produce a sharp natural pre-crack; temperature and speed is in a.
c) Pre-notch and razor blade notch as in b; temperature 23 °C; test speed 1 mm $min^{-1}$ (that is, one sixty-thousandth of the speed in a) and b).

An indication of the behaviour of a typical sample in the differing test conditions is given in Example 2(g) below.

The compressive yield stress $(\sigma y)_c$, was measured on the "Instron" machine with cross-head speed of 0.5mm/min, using samples of various dimensions.

Fracture mechanics speciments were retained and the fracture surfaces (see Fig 2) prepared for evaluation by Scanning Electron Microscopy (SEM) on an Hitachi 520. Transmission Electron Microscopy (SEM) on an Hitachi 520. Transmission Electron Microscopy (TEM) was performed using a Phillips 301. TEM samples were prepared by ultra microtoming the resin using a diamond knife.

Environmental stress cracking

For this test a test piece of dimensions: span 40 mm, thickness about 3mm of the composition was mounted in a three-point bend jig, loaded at predetermined strain levels and immersed in methyl ethyl ketone for 16 h. Strain levels E were expressed by the equation

$$E = \frac{6hY}{L^2}$$

where

h is the beam thickness
Y is the vertical beam deflection
L is the span.

This equation is taken from British Standard BS 2782 Part 3, 1978.

Mechanical testing of laminates

For cured laminates, Compression After Impact (CAI), compressive strength and Short Beam Strength (SBSS) were selected as the relevant parameters. CAI specimens were quai-isotropic laminates, with a $[+45,0,-45,90]_{Nn}$. lay-up, where N equalled four for 145g/$m^2$ prepreg. Samples were loaded to failure in compression following a standard 66.9 Jcm (1500 in-lb/in) impact as outlined in Boeing Material Specification 82/76.

Composite compressive strength was obtained on $[0]_8$ ply laminate, in accordance with ASTM-D-695. SBSS was obtained on $[0]_{24}$ ply laminates in accordance with ASTM-D-2344. Hot/wet testing for both compressive strength and

SBSS was carried out after conditioning at 74°C in water for 14 days. The solvent resistance of laminates was assessed by testing SBSS, after a 14 day soak at room temperature in the relevant solvent.

<u>Example 1</u>

A set of polyarylsulphones was synthesised by reacting together the appropriate aromatic dihalo-compounds and dihydric phenols exemplified by 4,4'-dichlorodiphenyl sulphone (DCDPS) (50 molar parts) with hydroquinone (10 to 40 molar parts) and 4,4'-dihydroxydiphenylsulphone (40-10 molar parts) in presence of potassium carbonate optionally with sodium carbonate, and diphenyl sulphone (DPS) solvent at a temperature rising to 280°C. Some of these syntheses used excess dihydric phenol, some excess DCDPS and, of the latter, some were reacted further with various proportions of m-aminophenol to give amino end groups.

The polymers made are set out, with leading properties in Tables 1 and 2.

Table 1:

| PES: **PEES Copolymers** | | | | | |
|---|---|---|---|---|---|
| Polymer | PES/PEES mol ratio | End group; % of possible* | | RV | Tg °C |
| A | 60:40 | OH | * | 0.22 | 213 |
| B | 40:60 | Cl | 100 | 0.21 | 186 |
| C | 40:60 | OH | * | 0.26 | 208 |
| D | 40:60 | $NH_2$ | 35 | 0.27 | 198 |
| E | 40:60 | $NH_2$ | 70 | 0.27 | 199 |
| F | 40:60 | $NH_2$ | 100 | 0.27 | 201 |
| G | 40:60 | $NH_2$ | * | 0.3 | 195 |
| H | 40:60 | $NH_2$ | * | 0.35 | 206 |
| I | 40:60 | $NH_2$ | * | 0.25 | 201 |
| J | 20:80 | OH | * | 0.38 | 198 |

* remainder of 100% is Cl in the case of OH or $NH_2$ end groups.

Table 2:

| **Copolymers containing other units** | | | | | | | | | |
|---|---|---|---|---|---|---|---|---|---|
| Polymer | $(Ph\ SO_2Ph)_n$ | | $(Ph)_a$ | | | | RV | End Group % | Tg °C |
| | n = | mol% | a = | Link | Position | mol% | | | |
| L | 1 | 80 | 2 | CO | 4,4' | 30 | 0.21 | OH; | 179 |
| M | 1 | 70 | 2 | CO | 4,4' | 30 | 0.22 | OH; | 142 |
| N | 1 | 70 | 1 | - | 3 | 30 | 0.25 | $NH_2$ | 185 |
| O | 1 | 30 | 1 | - | 4 | 30 | 0.25 | $NH_2$; over 95 | 238 |
| | 2 | 40 | - | - | - | - | - | - | |
| P | 1 | 50 | 1 | - | 4 | 30 | 0.24 | $NH_2$; over 95 | 222 |
| | 1 | 20 | - | - | - | - | - | - | |
| Q | 1 | 41.5 | 1 | - | 4 | 30 | 0.24 | $NH_2$ | |
| | 2 | 28.5 | - | - | - | - | - | | |

<u>Example 2</u>

Each of the polymers in Table 1 was formulated with one of the thermoset resins set out in Table 3. (The manufacturer's code names are as identified hereinbefore.

Table 3 -

| Precursors of thermoset | | | | | | |
|---|---|---|---|---|---|---|
| Formulation | MY 721 | MY 0510 | DEN 431 | XPY 306 | MDAB ++ | Hardener + |
| A | - | 36.1 | 34.3 | - | - | 29.6 |
| B | - | 65.2 | - | - | - | 34.8 |
| C | - | 36.9 | - | 32.9 | - | 30.1 |
| D | - | 35.4 | - | 36.9* | - | 27.2 |
| E | 52.1 | 15.1 | - | - | - | 32.8 |
| F | 68 | - | - | - | - | 32 |
| G | 54.4 | - | - | - | 20 | 25.6 |
| H | - | 32.3 | - | 32.3 | - | 35.4 |

* as the equivalent product known as XB336

+ 3,3'-diaminodiphenylsulphone (except Example 2f)

++ MDAB is 4,4'-bismaleimido diphenylmethane.

The procedure was as follows:

The thermoplast was dissolved in a 95:5 v/v methylene chloride/methanol mixture, to about 10% by weight. This solution was then added with stirring to the epoxy resin formulation without hardener. Once a homogeneous mixture was obtained, the correct weight of hardener was added. The resulting mixture was heated to boil off the solvent until the mixture contained 80% w/w solids. The mixture was poured into a 15 x 10 cm open mould and left at 145°C under vacuum for 30 mins. The vacuum was released, and the oven heated at 2°C/min to 180°C at which the sample cured for 2 h.

(a) <u>Effect of thermoplast unit composition</u>

A set of compositions was made containing 70% (dry solids) weight percent of epoxy formulation A or C and 30 weight percent of various polyarylethersulphones. The results of the above mentioned tests (using conditions a for $G_{Ic}$) are set out in Table 4. It is evident that there is a significant increase in fracture toughness $G_{1c}$, the best result being obtained using 40:60 PES: PEES polymer.

From these data as represented in figures 3(a) and 3(b) it is evident that especially favourable values of $G_{1c}$ and $K_{Ic}$ are obtained when the $SO_2$ content of the thermoplast is in the range 23 to 25%. This is the range in which co-continuous morphology resulting from spinodal decomposition occurse most readily. At higher $SO_2$ contents the morphology tends towards homogeneity as in Figure l(c). At $SO_2$ contents below 20% the islands-in-sea system increasingly occurs and is subject to fracture as in Figure 2(a).

(b) <u>Effect of thermoplast concentration</u>

A set of compositions was made containing epoxy formulation A and various concentrations of the 40:60 PES/PEES polymer of RV 0.26. The results of the above-mentioned tests are shown in Table 5.

Table 4

| Formulation | Epoxy | Thermoplast | | | | Morph** | Flex Mod | $(\sigma y)_c$ | $G_{1c}$ | $K_{1c}$ |
|---|---|---|---|---|---|---|---|---|---|---|
| | | PES/ PEES mol ratio | RV | End Group | $SO_2$ | | (GPa) | (MPa) | ($kJm^{-2}$) | ($MNm^{-1.5}$) |
| 1 | A | - | - | - | - | - | 3.67 | 185 | 0.38 | 0.84 |
| 2 | A | 100:0 | 0.26 | -OH | 27.7 | c | 3.22 | 171 | 0.59 | 0.98 |
| 3 | A | 60:40 | 0.22 | -OH | 25.2 | | 3.25 | 174 | 0.45 | 0.83 |
| 4 | A | 40:60 | 0.26 | -OH | 23.67 | d | 3.25 | 169 | 1.02 | 1.56 |
| 5 | A | Udel[1] | 0.24 | -OH | 14.5 | a | 3.26 | 136 | 0.87 | 1.35 |
| 6 | A | Udel[1] | 0.28 | -Cl | 14.5 | a | 3.14 | 128 | 0.39 | 0.83 |
| 7 | A | 100:00 | 0.50 | -OH | 27.7 | c | 3.75 | 187 | 0.41 | 0.9 |
| 8 | A | 40:60 | 0.30 | $-NH_2$ | 23.67 | d | 3.69 | 182 | 1.06 | 1.73 |
| 9 | C | 100:0 | 0.26 | -OH | 27.7 | c | 3.49 | 150 | 0.41 | 0.96 |
| 10 | C | 40:60 | 0.35 | $-NH_2$ | 23.67 | d | 3.56 | 162 | 0.83 | 1.42 |
| 11 | C | 40:60 | 0.25 | $-NH_2$ | 23.67 | d | 3.50 | 165 | 0.64 | 1.19 |
| 12 | C | 20:80 | 0.38 | -OH | 21.9 | d | 3.45 | 151 | 0.81 | 1.45 |
| 13 | C | Udel[1] | 0.20 | -NH | 14.5 | a | 3.49 | 138 | 0.50 | 1.06 |
| 14 | C | - | - | - | - | - | 3.97 | 194 | 0.26 | 0.60 |

**[1] - UDEL is a polymer of relatively low molecular weight consisting of ether-linked units $PhSO_2Ph$ and Ph $C(CH_3)_2$ Ph (where Ph is paraphenylene) and having end groups as shown.**

**** a, b, c or d from Fig 1.**

**Formulations 4, 8 and 10 to 12 are compositions according to the invention; the remaining formulations are comparative compositions.**

Table 5

| Thermoplast (% w/w) | Flex Mod (GPa) | $(\sigma y)_c$ (MPa) | $G_{1c}$ ($kJm^{-2}$) |
|---|---|---|---|
| 0* | 3.9 | 202 | 0.40 |
| 10 | 3.77 | 208 | 0.76 |
| 15 | 3.65 | 195 | 0.84 |
| 20 | 3.66 | 187 | 1.00 |
| 25 | 3.57 | 190 | 1.00 |
| 30 | 3.38 | 180 | 1.17 |
| 35 | 3.53 | 179 | 1.33 |
| 40 | 3.43 | 175 | 1.52 |

* - comparative.

The improvement in fracture toughness is especially significant using more than 15% of the thermoplast. The loss in modulus would be unimportant in many applications.

c) Effect of thermoplast molecular weight

The data for 40:60 polymer with formulation C epoxy (see Table 3) show that an increase in molecular weight increases toughness without significantly affecting flexural modulus.

In a set of runs using 40:60 polymer samples differing in molecular weight but all having $NH_2$ end groups, blended with epoxy resin formulation D in the total solids weight ratio 35 polymer to 65 resin, the comparative data shown in Table 6 were obtained in test conditions C.

Table 6

| Polymer | | Flex Mod (GPa) | $(\sigma_y)_c$ (MPa) | $G_{Ic}$ ($kJm^{-2}$) | $G_{Ic}$ error |
|---|---|---|---|---|---|
| RV | Approx MW | | | | |
| 0.16 | 5500 | 3.46 | 165 | 0.72 | ±0.44 |
| 0.24 | 12500 | 3.63 | 163 | 0.87 | ±0.05 |
| 0.38 | 17000 | 3.96 | 164 | 1.12 | ±0.37 |
| 0.43 | 19500 | 3.79 | 166 | 1.23 | ±0.10 |

The advantage of molecular weight over 10000 is evident.

(d) Effect of different epoxy resins

A set of compositions was made containing 70% (dry solids) weight of each of formulations A, B and C, along with 30 weight percent of amine-ended 40:60 polymer of RV 0.3. Test results (conditions a) in comparison with thermoplast-free epoxy are shown in Table 7.

Table 7

| Epoxy | Thermoplast (% w/w) | Flex Mode (GPa) | $(\sigma_y)_c$ (MPa) | $G_{Ic}$ ($kJm^{-2}$) |
|---|---|---|---|---|
| A | 0* | 3.9 | 202 | 0.38 |
| | 30 | 3.69 | 182 | 1.00 |
| B | 0* | 4.38 | 192 | 0.21 |
| | 30 | 4.00 | 161 | 0.55 |
| C | 0* | 3.97 | 194 | 0.26 |
| | 30 | 3.53 | 164 | 0.73 |

* - comparative.

The improvement in fracture toughness is very substantial.

e) Effect of hardener concentration

A set of compositions was made containing 70% dry solids weight of variants of epoxy formulation A differing in hardener concentration, along with 30 weight percent of amine-ended 40:60 polymer of RV 0.25. Of these epoxy formulations the 80% stoichiometric is the same as that shown in Table 3. (For stoichiometric calculation the polymer amine groups are not counted). Test results (conditions a) are shown in Table 8.

Table 8

| Hardener % of stoichiometric | Flex Mode (GPa) | $(\sigma_y)_c$ (MPa) | $G_{Ic}$ ($kJm^{-2}$) |
|---|---|---|---|
| 60 | 3.6 | 179 | 0.75 |
| 70 | 3.49 | 185 | 1.1 |
| 80 | 3.5 | 180 | 1.17 |
| 90 | 3.53 | 182 | 1.01 |
| 100 | 3.32 | 175 | 1.52 |

f) Effect of hardener type

The run in Example 2c using the 0.24RV polymer was repeated with the exception that 4,4'-diaminodiphenylenesulphone was used as hardener. $G_{Ic}$ was substantially the same at 0.88 $kJm^{-2}$.

g) Effect of test conditions

The sample in Example 2c using RV 0.24 polymer was also tested in conditions a and b and gave these results for $G_{Ic}$ ($kJm^{-2}$) : a 1.17; b 0.51; c 0.87.

h) Effect of polymer end groups

A set of 4 samples was prepared each using 35% w/w of one of the polymers set out in Table 1 above with epoxy formulation D and tested in conditions C for toughness. Results are shown in Table 9.

Table 9

| Formulation | End group molar ratio * | | Polymer RV | Flex Mod (GPa) | $(\sigma_y)_c$ (MPa) | $G_{Ic}$ ($kJm^{-2}$) |
|---|---|---|---|---|---|---|
| | Cl | $NH_2$ | | | | |
| 1 | 100 (100) | 0 (0) | 0.21 | 3.2 | NA | 0.02 |
| 2 | 65 (74) | 35 (26) | 0.27 | 3.17 | 160 | 0.08 |
| 3 | 30 (43) | 70 (57) | 0.27 | 3.26 | 164 | 0.69 |
| 4 | 0 (4) | 100 (96) | 0.27 | 3.16 | 169 | 0.92 |

* First numbers based on quantities of polymer synthesis reactants; numbers in parenthesis were measured by NMR.
Formulations 1 and 2 are comparative; Formulations 3 and 4 are in accordance with the invention.

It is evident that the composition is usable only for conditions not subject to fracture unless the amine content is substantially over 25%.

(i) Environmental stress cracking resistance

Further samples as in Example 2(h) were tested as described above. Results are shown in Table 10.

It is evident that the composition is usable only for conditions not subject to organic liquids such as MEK unless the amine end group content is substantially over 35%.

Table 10

| Formulation | End group molar ratio (design) | | Polymer RV | E | Result |
|---|---|---|---|---|---|
| | Cl | $NH_2$ | | | |
| 1 | 100 | 0 | 0.21 | 0.25 | Severe damage |
| 2 | 65 | 35 | 0.27 | 0.25 | Fracture in half |
| 2 | 65 | 35 | 0.27 | 0.5 | Fractured in half |
| 3 | 30 | 70 | 0.27 | 0.25 | No cracking |
| 4 | 0 | 100 | 0.27 | 0.25 | No cracking |
| 4 | 0 | 100 | 0.27 | 0.5 | No cracking |

Formulations 1 and 2 are comparative; Formulations 3 and 4 are in accordance with the invention.

Example 3

A solution containing epoxy formulation C (Table 2) and (on total solids) 35% w/w of thermoplast of 40:60 PES: PEES ratio, RV 0.26 and $-NH_2$ ends, in 90:10 v/v methylene chloride/methanol mixture at 55% w/w solids content was made by dissolving the hardener and the epoxy components, then adding, with stirring, a solution of the thermoplast in methylene chloride/methanol mixture. It was then heated to remove excess solvent and obtain a clear solution.

Unsized continuous collimated carbon fibres (grade 12K, AS4, Hercules Inc) were impregnated with this solution and the solvent evaporated to produce prepreg tape of a real weight 145 g per $m^2$, resin content 36% w/w and less than 1% w/w volatiles. The prepreg showed an acceptable level of tack and and drape. The prepreg was moulded in an autoclave into panels with lay-up $[0]_8$, $[0]_{24}$ and $[-45/0/+45/90]_{4s}$ using a standard vacuum bag technique and the following cure cycle:

heat to 180°C at 2°C/min at a pressure 23.5x$10^3$ Pa (176 mm Hg) absolute hold 2h at 180°C under 4.4 atm abs whilst venting vacuum bag;
hold at 180°C for 2 hr;
cool to room temperature at 2°C/min.

The results of the mechanical tests carried out on the resulting laminates are shown in Table 11.

These results show that the composite has superior compression after impact characteristic of a tough composite system and a 0° compressive strength which maintains a high value even at elevated temperature and hot-wet conditions. The composite also has a high short beam shear strength which is unaffected by exposure to ketone based solvents.

Table 11

| | | |
|---|---|---|
| Compressive Strength (MPa) | Room Temp | 1531 |
| | 82°C | 1345 |
| | 82°C (Wet) | 1186 |
| SBSS (MPa) | Room Temp | 107.6 |
| | 82°C | 86.2 |
| | 82°C (Wet) | 66.2 |
| | Acetone Soak | 109 |
| | MEK Soak | 108.2 |
| CAI (66.9 $Jcm^{-1}$ Impact), (MPa) | | 290 |

Example 4

Further comparison of differing thermoplast concentrations

A set of compositions was prepared by the procedure of Example 2 using the 40:60 PES:PEES amine ended polymer of RV 0.24 and epoxy formulation E described above. As a preliminary a sample of epoxy formulation E without thermoplast was cured and subjected to glass transition temperature (Tg) measurement in a Polymer Labs Dynamic Mechanical Analyser operated at 10KHz, in comparison with a cured sample of epoxy formulation D. The Tg values were in °C:

D 182
E 240

and thus represent the higher use temperature of component MY 721 as intended by its manufacturer.

The properties of the compositions are shown in Table 12 (toughness test B).

Table 12

| Polymer (% w/w) | Flex Mode (GPa) | $(\sigma_y)_c$ (MPa) | $G_{Ic}$ ($kJm^{-2}$) |
|---|---|---|---|
| 0* | 4.32 | 230.6 | 0.12 |
| 10 | 4.12 | 213.5 | 0.23 |
| 15 | 3.95 | 208 | 0.24 |
| 20 | 3.95 | 200.3 | 0.28 |
| 25 | 4.02 | 199.2 | 0.29 |
| 30 | 3.98 | 189.1 | 0.37 |

* - comparative.

Thus a significant improvement in fracture toughness $G_{Ic}$ results from the presence of the polymer without serious loss in flexural modulus.

Example 5

Use of bis maleimide (BMI) as part of thermoset component.

Using the procedure of Example 2 thermoset formulations F and G (see Table 3) were blended with the PES:PEES 40:60 70% amine ended polyarylsulphone (20% w/w on total solids of composition), cast into test samples and cured and tested. They were then tested using conditions C for $G_{Ic}$. Results are shown in Table 13.

Table 13

| Thermoset Formulation | Polyarylsulphone (% w/w) | Flex Mod (GPa) | $(\sigma_y)_c$ (MPa) | $G_{Ic}$ ($kJm^{-2}$) |
|---|---|---|---|---|
| F (no BMI) | 0* | 3.97 | 227.5 | 0.07 |
| F (no BMI) | 20 | 3.74 | 196.2 | 0.24 |
| G (with BMI) | 0* | 3.90 | 225.0 | 0.08 |
| G (with BMI) | 20 | 3.62 | 198.0 | 0.17 |

* - comparative.

It is evident that part of the thermoset can be provided by BMI resin and that the polyarylsulphone again improves fracture toughness.

Example 6

Effect of other polyarylsulphones in toughening epoxy resins

Using the procedure of Example 2 compositions were prepared by blending polymers L-Q (Table 2) and the PES: PEES 40:60 70% amine-ended polymer, each of these at 35% w/w, with epoxy formulation B or D (Table 3), cast into test samples and cured. They were then tested, using conditions C for $G_{Ic}$. Results are shown in Table 14.

Table 14

| Thermoset formulation | Polyarylsulphone (% w/w) | Flex Mod (GPa) | $(\sigma_y)_c$ (MPa) | $G_{Ic}$ ($kJm^{-2}$) |
|---|---|---|---|---|
| D | none | 3.88 | 192 | 0.17 |
| D | L | 3.98 | 168 | 0.59 |
| D | M | 4.08 | 165 | 1.12 |
| D | N | 3.36 | 174 | 0.82 |
| B | N | 3.41 | 183 | 0.54 |
| D | O | 3.77 | 164 | 0.42 |
| D | P | 3.90 | 178 | 0.55 |
| D | Q | 3.88 | 172 | 1.10 |
| D | PES:PEES | 3.63 | 163 | 0.87 |

Example 7

A solution containing epoxy formulation H (Table 3) and (on total solids) 35% w/w of polyarylsulphone of 40:60 PES : PEES ratio, RV 0.26 and $-NH_2$ ends, in methylene chloride at 55% w/w solids content was made by melt-mixing the two epoxy resin precursors at 50-80°C, adding, with stirring, a solution of the polyarylsulphone in methylene chloride. It was heated at 80-120° to remove excess solvent and obtain a clear solution. The hardener was then added and stirred in until uniformly distributed. The resulting viscous liquid mixture was cooled and stored at 0°C until required for use.

Unsided continuous collimated carbon fibres (grade Hercules Inc) were impregnated with this solution and the solvent evaporated to produce prepreg tape of resin content 36% w/w and less than 1% w/w volatiles. The prepreg showed an acceptable level of tack and drape. The prepreg was moulded in an autoclave into panels with lay-up $[0]_8$, $[0]_{16}$ and $[-45/0/+45/90]_{xs}$ (x = 2 or 3 depending on prepreg a real weight) using a standard vacuum bag technique and

the following cure cycle:

heat to 180°C at 1°C/min at a pressure 23.5x$10^3$ Pa (176 mm Hg) absolute hold 2h at 180°C under 5.8 atm abs whilst venting vacuum bag;
hold at 180°C for 2 hr;
cool to room temperature at less than 3°C/min.

The results of the tests carried out on the resulting laminates are shown in Table 15.

These results show again a tough composite system with compressive strength at a high value even at elevated temperature and hot-wet conditions, and with high short beam shear strength unaffected by exposure to ketone solvents.

A sample of the liquid mixture subjected to the same cure cycle was found to have Tg 181°C.

Table 15

| | |
|---|---|
| Morphology | co-continuous as from spinodal decomposition |
| Compressive Strength $[0]_8$ 20°C | 232 ksi (1600 MPa) |
| 82°C | 217 ksi (1497 MPa) |
| 82°C | 174 ksi (1200 MPa) |
| (Wet) | |
| CAI | 53.0 ksi (265 MPa) |
| Tensile strength 0°C | 453 ± 12 ksi (3124 ± 83 MPa) |
| Tensile modulus | 25.7 Msi (173.6 GPa) |
| Tensile strain | 1.7% |

Example 8

Example 7 was repeated using the same polyarylsulphone but with epoxy formulation D (Table 3) and using unsized IM 7 grade, ex Hercules.

Test results are shown in Table 16.

Table 16

| Morphology: co-continuous as from spinodal decomposition. | | | |
|---|---|---|---|
| Compressive strength | ksi | | MPa |
| 25°C | 216 ± 14 | | 1490 ± 97 |
| 82°C | 182 ± 13 | | 1255 ± 90 |
| 82°C (wet) | 165 ± 6 | | 1138 ± 41 |
| SBSS | | | |
| Room temp (dry) | 18.0 ± 0.7 | | 124.2 ± 4.8 |
| *(MEK) | 17.8 ± 0.2 | | 122.8 ± 1.4 |
| 82°C (MEK) | 14.3 ± 0.2 | | 98.6 ± 1.4 |
| CAI | 50.4 ± 2.1 | | 347.7 ± 14.5 |
| Tensile strength at room temp | 402 ± 33 | | 2772 ± 227 |
| Tensile Modulus (25°C) | 392 ± 21 | | 2701 ± 145 |
| Strain % (25°C) - 1.71 | - | | - |

* "(MEK)" denotes that the sample was immersed in methylethylketone for 2 weeks.

Example 9

Toughening of phenol-formaldehyde resin

At room temperature a phenol-formaldehyde precondensate (Novolak SFP 118 ex Schenectady Chemical Inc) (102 parts) was mixed in 90:10 v/v methylene chloride : methanol with hexamethylene tetramine (18 parts) and one of the following polyarylsulphones (30 parts):

a) Ether-linked $PhSO_2Ph$ 50 mole %
$PhSO_2PhPhSO_2Ph$ 50 mole %
End groups chlorine; Ph is paraphenylene; RV = 0.43
b) Ether-linked Ph $SO_2Ph$; Ph is paraphenylene
End groups over 95% $NH_2$; RV = 0.26
c) 25 mole % PES: 75 mole % PEES end groups over 95% $NH_2$; RV = 0.22

These mixtures were boiled down and cast into test plaques, along with D, a control containing no polyarylsulphone and cured. It was noted that plaques A, B and C showed co-continuous morphology. Plaques A-D were subjected to mechanical tests as described hereinbefore. Results are shown in Table 17.

Table 17

| Sample | Flex Mod (GPa) | $(\sigma_y)_c$ (MPa) | $K_{Ic}$ ($MNm^{1.5}$) | $G_{Ic}$ ($kJm^{-2}$) |
|---|---|---|---|---|
| A | 5.54 | 261.75 | 1.43 | 0.61 |
| B | 5.64 | 281.0 | 1.15 | 0.46 |
| C | 5.05 | 273.5 | 2.06 | 0.87 |
| D* | 5.70 | 286 | 0.53 | 0.15 |

* - comparative

Example 10

Toughening of bis-maleimide resin

a) The following ingredients were dissolved in sufficient of a 90:10 v/v methylene chloride/methanol mixture to give a 10% w/w solution:

| | |
|---|---|
| polymer Q (Table 2) | 20 parts |
| 3,3'-bismaleimidedodiphenylsulphone | 48 parts |
| 2,2'-diallylbisphenol A | 32 parts |
| hydroquinone | 2 parts |

The solvent was evaporated under vacuum, giving a viscous suspension. A sample of the suspension was run into a 15 x 10 cm open shallow mould and heated at low pressure (13.33 Pa (0.1 mm)) at 170°C for 1.5 h. The pressure was allowed to rise to atmospheric and a preheated lid was applied to the mould. The mould and its contents were heated at 2°C per min to 190°C, held at 190°C for 4 h, then allowed to cool slowly to room temperature. The casting was de-moulded and post-cured by heating at 2°C per min to 240°C, holding at 240°C for 6h, then cooling slowly to room temperature.

The casting was examined by TEM and SEM and found to exhibit a co-continuous morphology typical of spinodal decomposition of a preceding substantially homogeneous mixture.

Mechanical testing of the casting gave these results:

| | |
|---|---|
| Flex Mod (GPa) | 4.44 |
| $(\sigma_y)_c$ (MPa) | 213 |
| Tg (°C) | 240 |

b) Run (a) was repeated using 36 parts of the stated BMI ingredient and 12 parts of 4,4'-bis-3-maleimidophenoxy diphenylsulphone.

The morphology of the cured composition was essentially identical with that of 10a. Mechanical testing gave these results:

| | |
|---|---|
| Flex Mod (GPa) | 4.11 |
| $(\sigma_y)_c$ (MPa) | 213 |
| $K_{1c}$ ($MNm^{-1.5}$) | 1.34 |

(continued)

| | |
|---|---|
| $G_{1c}$ ($kJm^{-2}$) | 0.50 |

## Claims

1. A polymer composition comprising a thermoset resin component selected from the group consisting of an epoxy resin, an addition-polymerisation resin, preferably a bis-maleimide resin, a formaldehyde condensate resin, preferably a formaldehyde-phenol resin, a cyanate resin, an isocyanate resin and mixtures of two or more thereof and a polyarylsulphone component comprising at least one polyarylsulphone comprising ether- and/or thioether-linked repeating units selected from the group consisting of

$$-(PhSO_2Ph)_n-$$

and

$$-(Ph)_a-$$

wherein Ph is phenylene, n = 1 to 2 and can be fractional, a = 1 to 3 and can be fractional and when a exceeds 1, said phenylenes are linked linearly through a single chemical bond or a divalent group other than $-SO_2-$ or are fused together, provided that the repeating unit $-(PhSO_2Ph)_n-$ is always present in said at least one polyarylsulphone in such a proportion that on average at least two of said units $-(PhSO_2Ph)_n-$ are in sequence in each polymer chain present, said at least one polyarylsulphone having reactive pendant and/or end groups of formula -A'-Y where A' is a divalent hydrocarbon group and Y is a group selected from groups providing active hydrogen, epoxy, cyanate, isocyanate, vinyl, allyl, ethynyl and maleimide functionality, each of such components being present in mutually interpenetrating phases.

2. A composition according to claim 1 characterised by chemical bonds bridging the phases.

3. A composition according to claim 1 or claim 2 in which, in said at least one polyarylsulphone, said units $-(PhSO_2Ph)_n-$ and $-(Ph)_a-$ are in the ratio 75:25 to 50:50.

4. A composition according to any one of the preceding claim in which said at least one polyarylsulphone comprises repeating units:-

$$\text{I} \qquad X - Ph - SO_2 - Ph - X - Ph - SO_2 - Ph -$$

and

$$\text{II} \qquad - X - (Ph)_a - X - Ph - SO_2 - Ph -$$

where X is -O- or -S- and may differ from unit to unit and the ratio of I to II is in the range 10:90 to 80:20, preferably 10:90 to 55:45.

5. A composition according to any one of the preceding claims in which said at least one polyarylsulphone has a weight percent $-SO_2-$ content, defined as 100 times (weight of $-SO_2-$)/(weight of average repeat unit), in the range 23 to 25.

6. A composition according to any one of the preceding claims which comprises reinforcing fibres.

7. A process for making a thermosettable composition by the steps of:-

   (a) making a blend comprising an uncured or incompletely cured precursor of a thermoset resin component selected from the group consisting of an epoxy resin, an addition-polymerisation resin, preferably a bis-maleimide resin, a formaldehyde condensate resin, preferably a formaldehyde-phenol resin, a cyanate resin, an isocyanate resin and mixtures of two or more thereof, a polyarylsulphone component comprising at least one polyarylsulphone comprising ether- and/or thioether-linked repeating units selected from the group consisting of

$$-(PhSO_2Ph)_n-$$

   and

$$-(Ph)_a-$$

wherein Ph is phenylene, n = 1 to 2 and can be fractional, a = 1 to 3 and can be fractional and when a exceeds 1, said phenylenes are linked linearly through a single chemical bond or a divalent group other than $-SO_2-$ or are fused together, provided that the repeating unit $-(PhSO_2Ph)_n-$ is always present in said at least one polyarylsulphone in such a proportion that on average at least two of said units $-(PhSO_2Ph)_n-$ are in sequence in each polymer chain present, said at least one polyarylsulphone having reactive pendant and/or end groups of formula -A'-Y where A' is a divalent hydrocarbon group and Y is a group selected from groups providing active hydrogen, epoxy, cyanate, isocyanate, vinyl, allyl, ethynyl and maleimide functionality, and, optionally, a solvent therefor, said components being selected and the conditions of blending being controlled so that the precursor and the polyarylsulphone are present as a substantially homogeneous single phase stable liquid mixture;
(b) rendering said mixture unstable by one or more of the measures:-

(i) adding or, if present, removing solvent;
(ii) changing the temperature of the mixture;
(iii) adding fibres and/or particulate filler;
(iv) causing partial curing of said precursor;

(c) decomposing said mixture spinodally into at least mutually interpenetrating phases; and
(d) if required, adding (further) fibres and/or particulate filler.

**8.** A process according to claim 7 and including the further steps:-

(e) forming the mixture into a prepreg by impregnation of continuous fibres;
(f) laying-up said prepreg;
(g) curing said precursor.

## Patentansprüche

**1.** Polymerzusammensetzung, umfassend eine duroplastische Harzkomponente, ausgewählt aus der Gruppe, bestehend aus einem Epoxidharz, einem Additionspolymerisationsharz, bevorzugt einem Bismaleinsäureimidharz, einem Formaldehydkondensatharz, bevorzugt einem Formaldehydphenolharz, einem Cyanatharz, einem Isocyanatharz und Mischungen aus zweien oder mehreren dieser Harze, und eine Polyarylsulfonkomponente, die wenigstens ein Polyarylsulfon umfaßt, das ether- und/oder thioetherverknüpfte Wiederholungseinheiten umfaßt, die ausgewählt sind aus der Gruppe, bestehend aus

$$-(PhSO_2Ph)_n-$$

und

$$-(Ph)_a-$$

worin Ph ein Phenylen darstellt, n = 1 bis 2 ist und gebrochen sein kann, und a 1 bis 3 ist und gebrochen sein kann, und wenn a größer als 1 ist, die Phenylene linear durch eine chemische Einfachbindung oder eine divalente Gruppe, die nicht $-SO_2-$ darstellt, verknüpft sind oder kondensiert sind, vorausgesetzt, daß die Wiederholungseinheit $-(PhSO_2Ph)_n-$ immer in dem wenigstens einen Polyarylsulfon in einem solchen Anteil anwesend ist, daß im Mittel wenigsten zwei der Einheiten $-(PhSO_2Ph)_n-$ in Aufeinanderfolge in jeder Polymerkette vorhanden sind, wobei das wenigstens eine Polyarylsulfon ein reaktives Gegenüber und/oder Endgruppen der Formel -A'-Y besitzt, worin A' eine divalente Kohlenwasserstoffgruppe und Y eine Gruppe darstellt, die ausgewählt ist aus den Gruppen, die aktive Wasserstoffatom-, Epoxid-, Cyanat-, Isocyanat-, Vinyl-, Allyl-, Ethinyl- und Maleinsäureimidfunktionalität bereitstellen, wobei jede dieser Komponenten in einander gegenseitig durchdringenden Phasen vorhanden ist.

**2.** Zusammensetzung nach Anspruch 1, dadurch gekennzeichnet, daß chemische Bindungen die Phasen verknüpfen.

**3.** Zusammensetzung nach Anspruch 1 oder Anspruch 2, in der in dem wenigstens einen Polyarylsulfon die Einheiten $-(PhSO_2Ph)_n-$ und $-(Ph)_a-$ im Verhältnis 75:25 bis 50:50 vorliegen.

**4.** Zusammensetzung nach einem der vorhergehenden Ansprüche, in der das wenigstens eine Polyarylsulfon die folgenden Wiederholungseinheiten umfaßt:

I $X\ Ph\ SO_2\ Ph\ X\ Ph\ SO_2\ Ph$

und

II $X\ (Ph)_a\ X\ Ph\ SO_2\ Ph$

worin X -O- oder -S- darstellt und von Einheit zu Einheit verschieden sein kann und das Verhältnis von I zu II zwischen 10:90 und 80:20 und bevorzugt zwischen 10:90 und 55:45 liegt.

**5.** Zusammensetzung nach einem der vorhergehenden Ansprüche, in der das wenigstens eine Polyarylsulfon einen gewichtsprozentualen $SO_2$-Gehalt, definiert als 100 × (Gewicht von $SO_2$)/(Gewicht der mittleren Weiderholungseinheit), im Bereich von 23 bis 25 aufweist.

**6.** Zusammensetzung nach einem der vorhergehenden Ansprüche, die Verstärkungsfasern umfaßt.

**7.** Verfahren zur Herstellung einer wärmehärtbaren Zusammensetzung mit folgenden Schritten:

(a) Herstellung einer Mischung, die einen ungehärteten oder unvollständig gehärteten Vorläufer einer duroplastischen Harzkomponente, ausgewählt aus der Gruppe, bestehend aus einem Epoxidharz, einem Additionspolymerisationsharz, bevorzugt einem Bismaleinsäureimidharz, einem Formaldehydkondensatharz, bevorzugt einem Formaldehydphenolharz, einem Cyanatharz, einem Isocyanatharz und einer Mischung aus zweien oder mehreren dieser Harze, und eine Polyarylsulfonkomponente, die wenigstens ein Polyarylsulfon umfaßt, das ether- und/oder thioetherverknüpfte Wiederholungseinheiten umfaßt, die ausgewählt sind aus der Gruppe, bestehend aus

$$-(PhSO_2Ph)_n-$$

und

$$-(Ph)_a-$$

worin Ph ein Phenylen darstellt, n = 1 bis 2 ist und gebrochen sein kann, und a 1 bis 3 ist und gebrochen sein kann, und wenn a größer als 1 ist, die Phenylene linear durch eine chemische Einfachbindung oder eine divalente Gruppe, die nicht $-SO_2-$ darstellt, verknüpft sind oder kondensiert sind, vorausgesetzt, daß die Wiederholungseinheit $-(PhSO_2Ph)_n-$ immer in dem wenigstens einen Polyarylsulfon in einem solchen Anteil anwesend ist, daß im Mittel wenigsten zwei der Einheiten $-(PhSO_2Ph)_n-$ in Aufeinanderfolge in jeder Polymerkette vorhanden sind, wobei das wenigstens eine Polyarylsulfon ein reaktives Gegenüber und/oder Endgruppen der Formel -A'-Y besitzt, worin A' eine divalente Kohlenwasserstoffgruppe und Y eine Gruppe darstellt, die ausgewählt ist aus den Gruppen, die aktive Wasserstoffatom-, Epoxid-, Cyanat-, Isocyanat-, Vinyl-, Allyl-, Ethinyl- und Maleinsäureimidfunktionalität bereitstellen, und gegebenenfalls ein Lösungsmittel dafür umfaßt, wobei die Komponenten so ausgewählt und die Bedingungen der Mischung so gesteuert sind, daß das Polyarylsulfon und der Vorläufer als eine im wesentlichen homogene flüssige stabile Einphasenmischung vorliegen,

(b) Überführen dieser Mischung in eine instabile Form durch eine oder mehrere der folgenden Maßnahmen:

(i) Zugeben oder (wenn vorhanden) Entfernen des Lösungsmittels,
(ii) Änderung der Temperatur,
(iii) Zugeben von Fasern und/oder teilchenförmigen Füllstoffen,
(iv) Bewirken des teilweisen Härtens des Vorläufers,

(c) Spinodales Zersetzen der Mischung in wenigsten sich gegenseitig durchdringende Phasen und

(d) wenn erforderlich, Zugeben von (weiteren) Fasern und/oder teilchenförmigen Füllstoffen.

**8.** Verfahren nach Anspruch 7 unter Einschluß der folgenden weiteren Schritte:

(e) Überführen der Mischung in ein Prepreg durch Imprägnieren von ununterbrochenen Fasern

(f) Aufschichten des Prepregs zu Lagen,

(g) Härten des duroplastischen Harzvorläufers.

**Revendications**

1. Composition de polymères comprend un composant résine thermodurcie choisi dans le groupe consistant en une résine époxy, une résine de polymérisation par addition, de préférence une résine bis-maléimide, une résine de condensat de formaldéhyde, de préférence une résine formaldéhyde-phénol, une résine cyanate, une résine isocyanate et des mélanges de deux ou plusieurs de celles-ci, et un composant polyarylsulfone comprenant au moins une polyarylsulfone comprenant des unités répétées liées par des liaisons éther et/ou thioéther choisies dans le groupe consistant en :

$$-(PhSO_2Ph)_n-$$

et

$$(Ph)_a-,$$

où Ph est un groupe phénylène, <u>n</u> = 1 à 2 et peut être une fraction, <u>a</u> = 1 à 3 et peut être une fraction et, lorsque <u>a</u> dépasse 1, ces groupes phénylènes sont liés linéairement par une liaison chimique unique ou par un groupe divalent autre que $-SO_2-$ ou bien sont condensés, à condition que l'unité répétée $-(PhSO_2Ph)_n-$ soit toujours présente dans cette polyarylsulfone au moins présente en une telle proportion telle qu'en moyenne au moins deux de ces unités $-(PhSO_2Ph)_n-$ se suivent dans chaque chaîne de polymère présente, cette polyarylsulfone au moins présente ayant des groupes réactifs pendants et/ou terminaux de formule -A'-Y, dans laquelle A' est un groupe hydrocarboné divalent et Y est un groupe choisi parmi des groupes fournissant une fonctionalité hydrogène actif, époxy, cyanate, isocyanate, vinyle, allyle, éthynyle et maléimide, chacun de ces composants étant présent dans des phases qui s'interpénètrent de façon mutuelle.

2. Composition suivant la revendication 1, caractérisé par des liaisons chimiques reliant les phases.

3. Composition suivant les revendications 1 ou 2, dans laquelle, dans cette polyarylsulfone au moins présente, ces unités $-(PhSO_2Ph)_n-$ et $-(Ph)_a-$ sont dans le rapport de 75:25 à 50:50.

4. Composition suivant l'une quelconque des revendications précédentes, dans laquelle cette polyarylsulfone au moins présente comprend des unités répétées :

$$\text{I} \qquad -X-Ph-SO_2-Ph-X-Ph-SO_2-Ph-$$

et

$$\text{II} \qquad -X-(Ph)_a-X-Ph-SO_2-Ph$$

dans lesquelles X est -O- ou -S- et peut différer d'une unité à l'autre, et le rapport de I à II est compris entre 10:90 et 80:20,de préférence entre 10:90 et 55:45.

5. Composition suivant l'une quelconque des revendications précédentes, dans laquelle cette polyarylsulfone au moins présente a une teneur en $-SO_2-$ en pourcentage pondéral, définie en tant que 100 fois (poids de $-SO_2-$)/(poids d'une unité répétée moyenne) dans la gamme de 23 à 25.

6. Composition suivant l'une quelconque des revendications précédentes, qui comprend des fibres de renforcement.

7. Procédé pour préparer une composition thermodurcissable comprenant les étapes suivantes:

(a) on prépare un mélange comprenant un précurseur non durci ou incomplètement durci d'un composant résine thermodurcie choisi dans le groupe consistant en une résine époxy, une résine de polymérisation par addition, de préférence une résine bis-maléimide, une résine de condensat de formaldéhyde, de préférence une résine formaldéhyde-phénol, une résine cyanate, une résine isocyanate et des mélanges de deux ou plusieurs de celles-ci, et un composant polyarylsulfone comprenant au moins une polyarylsulfone comprenant des unités répétées liées par des liaisons éther et/ou thioéther choisies dans le groupe consistant en :

$$-(PhSO_2Ph)_n-$$

et

$$-(Ph)_a-,$$

où Ph est un groupe phénylène, n = 1 à 2 et peut être une fraction, a = 1 à 3 et peut être une fraction et, lorsque a dépasse 1, ces groupes phénylènes sont liés linéairement par une liaison chimique unique ou par un groupe divalent autre que $-SO_2-$ ou bien sont condensés, à condition que l'unité répétée $-(PhSO_2Ph)_n-$ soit toujours présente dans cette polyarylsulfone au moins présente en une telle proportion telle qu'en moyenne au moins deux de ces unités $-(PhSO_2Ph)_n-$ se suivent dans chaque chaîne de polymère présente, cette polyarylsulfone au moins présente ayant des groupes réactifs pendants et/ou terminaux de formule -A'-Y, dans laquelle A' est un groupe hydrocarboné divalent et Y est un groupe choisi parmi des groupes fournissant une fonctionalité hydrogène actif, époxy, cyanate, isocyanate, vinyle, allyle, éthynyle et maléimide, et éventuellement un solvant pour ce mélange, ces composants étant choisis et les conditions de mélange étant contrôlées de telle sorte que la polyarylsulfone et le précurseur sont présents sous forme d'un mélange liquide stable en phase unique pratiquement homogène;

(b) on rend instable ce mélange par l'une ou plusieurs de ces mesures:

(i) addition ou s'il est présent, élimination de solvant;
(ii) changement de la température du mélange;
(iii) addition de fibres et/ou de charge particulaire;
(iv) durcissement partiel de ce précurseur;

(c) on décompose ce mélange de façon spinodale en au moins 2 phases qui s'interpénètrent mutuellement; et
(d) si cela est requis, on ajoute des fibres et/ou une charge particulaire (supplémentaires).

**8.** Procédé suivant la revendication 7 et comprenant les étapes supplémentaires suivantes :

(e) la formation du mélange en un prépreg par imprégnation de fibres continues;
(f) l'empilage de ce prépreg;
(g) le durcissement de ce précurseur.

Fig.1.

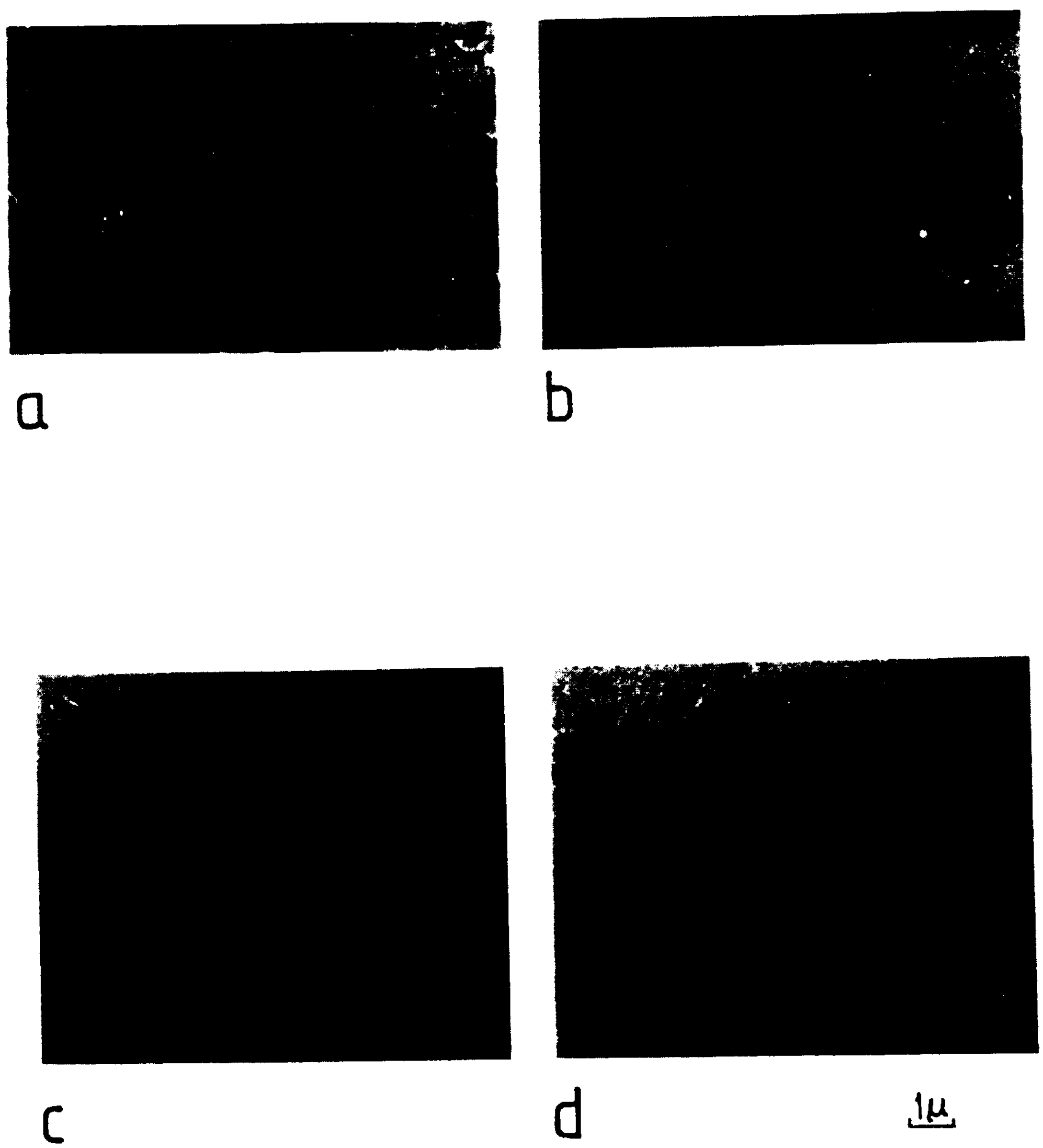

Fig. 2. Resin fracture surfaces

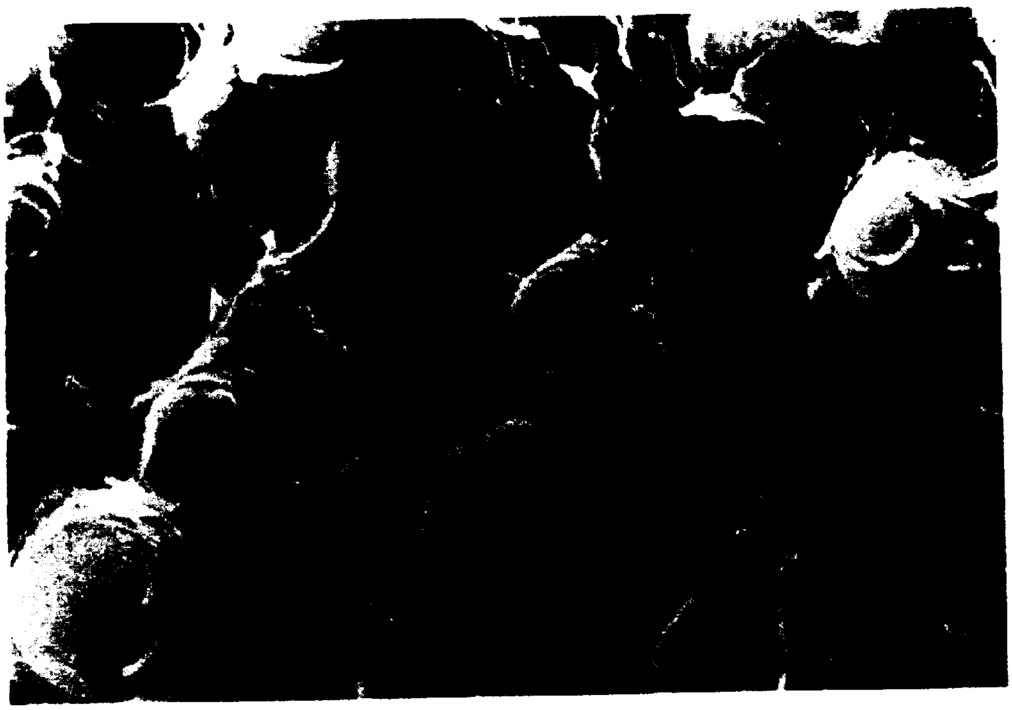

a



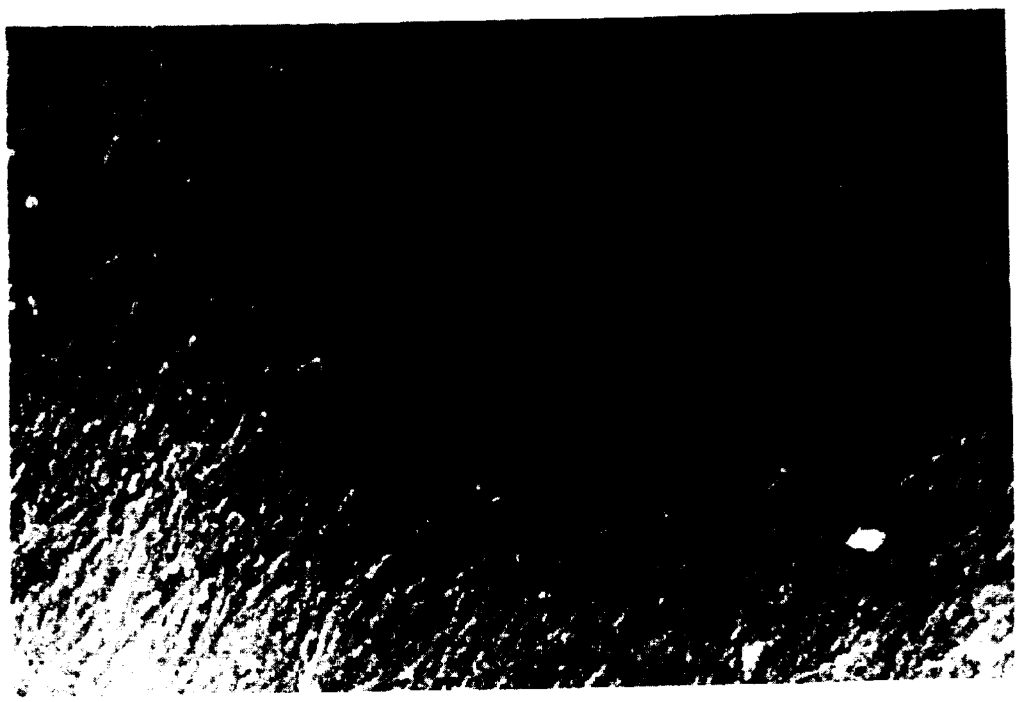

b

Fig.3(a)

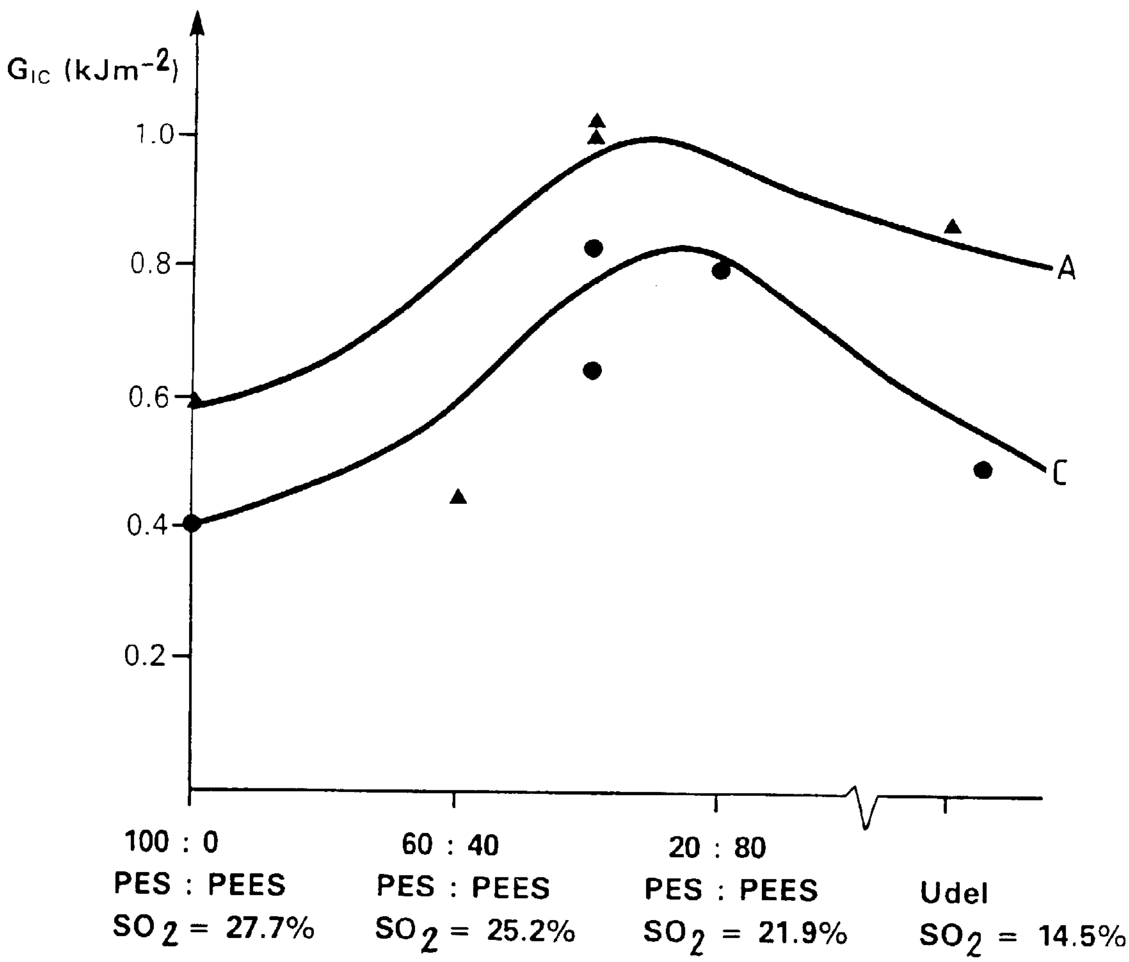
$G_{IC}$ ($kJm^{-2}$)
1.0
0.8
0.6
0.4
0.2
A
C
100 : 0
PES : PEES
$SO_2$ = 27.7%
60 : 40
PES : PEES
$SO_2$ = 25.2%
20 : 80
PES : PEES
$SO_2$ = 21.9%
Udel
$SO_2$ = 14.5%

Fig.3(b)

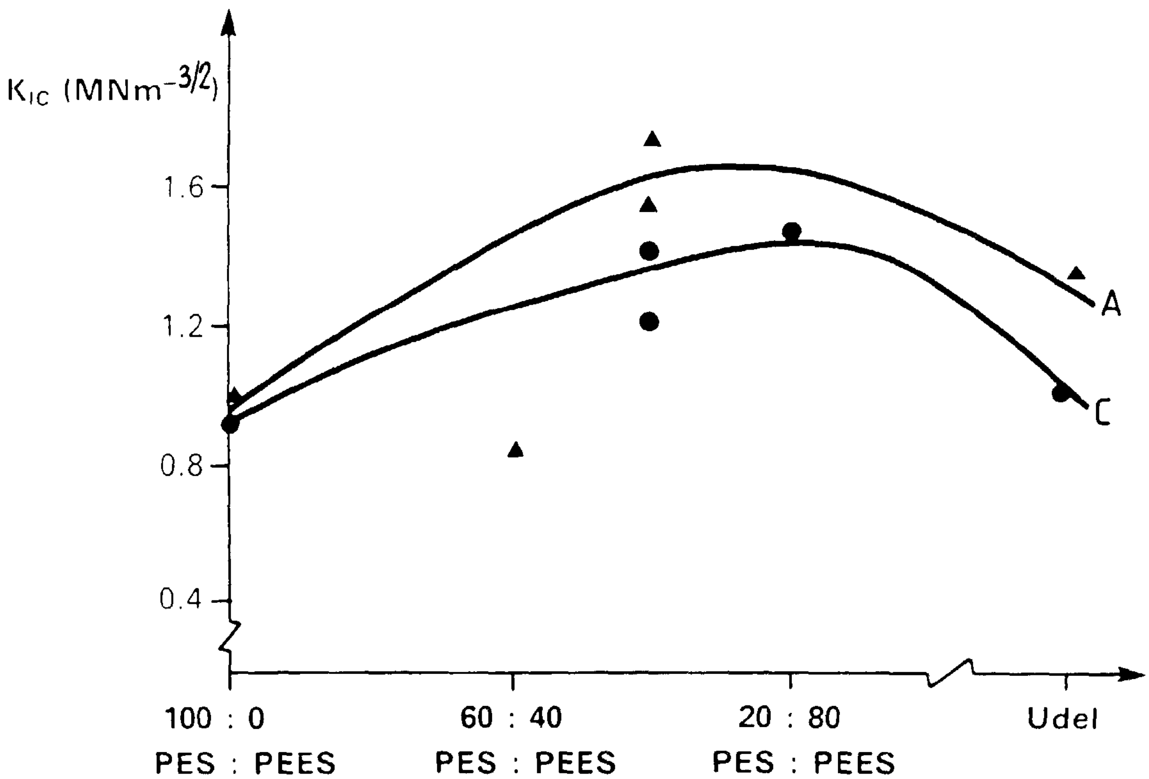
KIC (MNm-3/2)
1.6
1.2
0.8
0.4
A
C
100 : 0
PES : PEES
60 : 40
PES : PEES
20 : 80
PES : PEES
Udel